# EUROPEAN PATENT SPECIFICATION

(11) **EP 0 558 626 B1**
(45) Date of publication and mention of the grant of the patent: **09.09.1998**
(21) Application number: 92900965.2
(22) Date of filing: 19.11.1991
(51) Int. Cl.: B32B 5/00, B32B 7/00, F41H 1/00, F41H 5/04

(54) **FABRIC BASED ARTICLES HAVING IMPROVED PENETRATION RESISTANCE**
ARTIKEL AUF GEWEBEBASIS MIT VERBESSERTER PENETRATIONSBESTÄNDIGKEIT
ARTICLES EN TISSU PRESENTANT UNE RESISTANCE ACCRUE A LA PENETRATION

(30) Priority: 19.11.1990 US 615102
(43) Date of publication of application: 08.09.1993
(73) Proprietor: AlliedSignal Inc., Morristown, New Jersey 07962-2245 (US)
(72) Inventor: HARPELL, Gary, A., Morristown, NJ 07960 (US); PREVORSEK, Dusan, C., Morristown, NJ 07960 (US); CUNNINGHAM, David, C., Midlothian, VA 23112 (US)
(74) Representative: Brock, Peter William
(86) International application number: US9108638
(87) International publication number: WO9208604

(56) References cited:
- EP-A- 241 681
- EP-A- 299 503
- WO-A-92/08607
- DE-A- 2 931 110
- GB-A- 2 124 887
- GB-A- 2 130 073
- US-A- 3 562 810
- US-A- 3 582 988
- US-A- 3 641 638
- US-A- 3 841 954
- US-A- 3 971 072
- US-A- 3 988 780
- US-A- 4 608 717
- US-A- 4 613 535
- US-A- 4 923 728
- US-A- 4 989 266

## Description

### BACKGROUND OF THE INVENTION

### 1. Field of the Invention

This invention relates to articles having improved penetration resistance. More particularly, this invention relates to such articles which are fiber based and which are especially suitable for fabrication into penetration resistant articles such as body armor, as for example, bulletproof vests.

### 2. Prior Art

Ballistic articles such as bulletproof vests, helmets, structural members of helicopters and other military equipment, vehicle panels, briefcases, raincoats and umbrellas containing high strength fibers are known. Fibers conventionally used include aramid fibers such as poly (phenylenediamine terephthalamide), graphite fibers, nylon fibers, ceramic fibers, glass fibers and the like. For many applications, such as vests or parts of vests, the fibers are used in a woven or knitted fabric. For many of the applications, the fibers are encapsulated or embedded in a matrix material.

U.S. Patent Nos. 3,971,072 and 3,988,780 relate to light weight armor and method of fabrication of same. Reinforced body armor and the like is fabricated by securing a thin ballistic metal outer shell to a plurality of layers of flexible material having qualities resistant to ballistic penetration. The layers of material are sewn together along paths spaced within a selected predetermined range, so as to restrict movement of the fabric layers in lateral and longitudinal directions and to compact the layers in an elastic mass thereby to provide improved resistance to penetration of the material by a ballistic missile and to reduce back target distortion.

U.S. Patent No. 4,183,097 relates to a contoured, all-fabric, lightweight, body armor garment for the protection of the torso of a woman against small arms missiles and spall which comprises a contoured front protective armor panel composed of a plurality of superposed layers of ballistically protective plies of fabric made of aramid polymer yarns, the front protective armor panel being contoured by providing overlapping seams joining two side sections to a central section of the panel so as to cause the front protective armor panel to be contoured to the curvature of the bust of a female wearer of the body armor garment to impart good ballistic protection and comfort to the wearer.

U.S. Patent No. 3,855,632 relates to an undershirt type garment made of soft, absorbent, cotton-like material, stitched thereto and covering the chest and abdomen areas and the back area of the wearer's torso. Inserted between each of the panels and the portions of the shirt which they cover is a pad formed of a number of sheets of closely woven, heavy gage nylon thread. The sheets are stitched together and to the shirt generally along their outer edges so that the major portions of the sheets are generally free of positive securement to each other and thus may flex and move to some extent relative to each other. Thus, the garment, in the padded areas, is substantially bullet-proof and yet is lightweight, flexible, non-bulky and perspiration absorbent.

U.S. Patent No, 4,522,871 relates to an improved ballistic material comprising a multiplicity of plies of ballistic cloth woven with an aramid, e.g., Kevlar®, thread, one or more of which plies are treated with resorcinol formaldehyde latex to coat the aramid threads and fill the interstices between the threads of a treated ply.

US-A-4,510,200 relates to material useful in bulletproof clothing is formed from a number of laminates arranged one on top of another. The laminates are preferably formed of a substrate coated with a crushed thermosettable foam that, in turn, covered with a surface film, which may be an acrylic polymer. The films should form the outermost layers of the composite material which together with the foam layer, prevent degradation of the substrate, which is typically formed of fabric woven from Kevlar.

US-A-4,331,091 describes three-dimensional thick fibers made from a laminate of fabric plies held together by yarn looped through holes in the structure. US-A-4,584,228 describes a bullet-proof garment including several layers of textile fabric or foil superimposed on a shock absorber, in which the shock absorber is a three dimensional fabric with waffle-like surfaces.

US-A-4,623,574; 4,748,064; 4,916,000; 4,403,012; 4,457,985; 4,650,710; 4,681,792; 4,737,401; 4,543,286; 4,563,392; and 4,501,856 described ballistic resistant articles which comprise a fibrous network such as a fabric or 0°/90° uniaxial pregreg in a matrix.

EP-A-0299503 discloses the use of matted aramid fibers arranged at a distance behind an armour plate outer layer to absorb the energy of projectiles or shrapnel penetrating the armour plate.

US-A-3562810 discloses protective material and garments, resistive to penetration by flying missiles, such as bullets or shrapnel, which are fabricated by securing and tensioning a number of layers of ballistic material together along spaced paths to compact the layers so as to provide high resistance to penetration and to deflect impinging objects while leaving the layers sufficiently resilient to distribute the force of impact over a large area bordering the point of impact.

US-A-3841954 (preamble of claim 1) discloses a laminated material made up of densified layers of flexible material such as films or fabrics, e.g. of polymers or inorganic fibers. The flexible layers are stitched together with reinforcing filaments and then densified under heat and pressure to form a compressed rigid laminate which is suitable as a backing for personnel armour.

DE-A-2931110 discloses a multilayer protective material formed from high strength materials such as aramid fibers, the layers being fastened together, e.g. by adhesion or rivetting.

The above-mentioned US-A-4681792 discloses flexible articles comprising a plurality of first flexible layers arranged in a first portion of said article, each of said first layers comprising fibers having a tensile modulus of at least 300 grams/denier (264.9 dN/tex) and a tenacity of at least 15 grams/denier (13.25 dN/tex), and a plurality of second flexible layers arranged in a second portion of said article, each of said second flexible layers comprising fibers, the resistance to displacement of fibers in each of said second flexible layers being greater than the resistance to displacement of fibers in each of said first flexible layers.

The present invention provides a penetration resistant article comprising a plurality of flexible fibrous layers, at least two of which are secured together by a plurality of rows of stitches,. According to the invention, the stitches are comprised of fiber having a tensile modulus equal to or greater than 200 grams/denier (176.6 dN/tex) and a tenacity equal to or greater than 5 grams/denier (4.42 dN/tex), and the fibrous layers comprise fibers having a tensile strength of at least 7 grams/denier (6.18 dN/tex), a tensile modulus of at least 160 grams/denier (141.28 dN/tex) and a energy-to-break of at least 30 joules/gram.

The article according to the invention provides penetration resistance to low velocity threats from sharp articles, such as knives.

Another embodiment of this invention relates to a penetration resistant article comprising:
(a) a plurality of flexible fibrous layers comprised of a network of fibers, at least two of said fibrous layers secured together by a plurality stitches (preferably adjacent and more preferably adjacent, and parallel or substantially parallel and separated by a distance of less than 1/8 in. (0.3175 cm)) comprised of fiber having a tensile modulus and a tensile strength as defined above; and
(b) at least one rigid layer which comprises a plurality of rigid bodies arranged with said plurality of flexible fibrous layers.

As used herein, the "penetration resistance" of the article is the resistance to penetration by a designated threat, as for example, a bullet, an ice pick, a knife or the like. The penetration resistance for designated threat can be expressed as the ratio of peak force (F) for a designated threat (projectile, velocity, and other threat parameters known to those of skill in the art to affect peak force) divided by the areal density (ADT) of the target. As used herein, the "peak force" or "F" is the maximum force exerted by a threat to penetrate a designated target using a model 1331 high speed Instron Tester having an impact velocity of about 12ft/sec (3.66m/sec) and where the target strike face area has a diameter of 3 in. (7.6 cm) (See the Examples); and as used herein, the "areal density" or "ADT" is the ratio of total target weight to the weight of the target strike face area.

Several advantages flow from this invention. For example, the articles of this invention are relatively flexible, and exhibit relatively improved penetration resistance as compared to other articles of the same construction and composition but having differing securing means. Other advantages include reduced thickness, elimination of wrinkling and better control of component flexibility.

### BRIEF DESCRIPTION OF THE DRAWINGS

The invention will be more fully understood and further advantages will become apparent when reference is made to the following detailed description of the invention and the accompanying drawings in which
FIG. 1 is a front view of body armor, in the form of a vest, fabricated from reinforced ballistic material in accordance with this invention.
FIG. 2 is an enlarged fragmentary sectional view taken on line 2-2 of FIG. 1 showing a plurality of ballistic resistant fibrous layers with securing means securing the fibrous layers together;
FIG. 3 is a front perspective view of a body armor of this invention having certain selected components cut away for purposes of illustration.
FIG. 4 is an enlarged fragmentary sectional view of the body armor of this invention of FIG. 3 taken on line 4-4 which includes a plurality of rigid ballistic resistant elements on outer surfaces of a plurality of fibrous layers.
FIG. 5 is an enlarged fragmental sectional view of the body armor of this invention FIG. 3 taken on line 4-4 which includes a plurality of rigid ballistic elements on one side of two fibrous layers.
FIG. 6 is a fragmentary frontal view of the body armor of this invention of FIG. 3 in which certain selected layers have been cut away to depict equilateral triangular shaped rigid panels laminated and sewn on both sides of a stitched fabric.
FIG. 7 is a fragmentary frontal view of the body armor of this invention of FIG. 3 in which certain selected layers have been cut away to depict of right angle triangular shaped rigid panels laminated and sewn on both sides of a stitched fabric.
FIG. 8 is a fragmentary frontal view of another embodiment of this invention similar to that of FIG. 3 in which certain selected layers have been cut away to depict shaped rigid panels laminated to one side of the fabric in which the panels are in the shape of equilateral triangles and hexagons.
FIG. 9 is a fragmentary frontal view of another embodiment of this invention similar to that of FIG. 3 having shaped rigid panels laminated to one side of the fabric in which the panels are in the shape of equilateral triangles and hexagons.
FIG. 10 is a frontal view of a truncated equilateral triangle.

### DETAILED DESCRIPTION OF THE PREFERRED EMBODIMENTS OF THE INVENTION

The preferred embodiments of this invention will be better understood by those of skill in the art by reference to the above figures. The preferred embodiments of this invention illustrated in the figures are not intended to be exhaustive or to limit the invention to the precise form disclosed. They are chosen to describe or to best explain the principles of the invention and its application and practical use to thereby enable others skilled in the art to best utilize the invention.

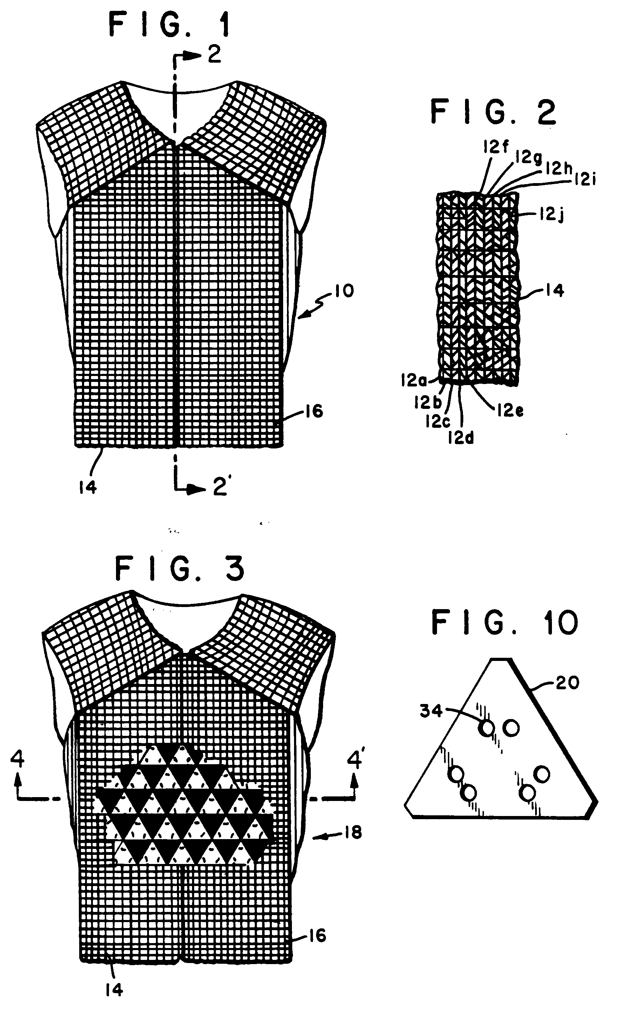

Referring to FIGs 1 and 2, the numeral 10 indicates a ballistic resistant article 10, which in this preferred embodiment of the invention is a penetration resistant body armor which comprises a plurality of fibrous layers 12. As depicted in FIG 2, article 10 is comprised of ten layers 12a to 12j. However, the number of layers 12 included in article 10 may vary widely, provided that at least two layers are present. In general, the number of layers in any embodiment will vary depending on the degree of penetration resistance and flexibility desired. The number of fibrous layers 12 is preferably from 2 to about 70, more preferably from about 5 to about 60 and most preferably from about 20 to about 50.

As shown in FIG's 1 and 2, fibrous layers 12ₐ to 12j are each secured together by horizontal stitches 14 and vertical stitches 16, which in the illustrative embodiments of the invention depicted in the figures is stitching. While in the embodiment of the figures all fibrous layers 12ₐ to 12j are secured together, it is contemplated that the number of layers 12 secured together may be as few as two, or any number of layers 12 in article 10 in any combination. In the preferred embodiments of the invention where the number of layers 12 is more than about 20, all the layers are not secured together. In these embodiments, from about 2 to about 20 layers, preferably from 2 to about 12 layers, more preferably,from about 2 to about 10 layers and most preferably from about 2 to about 8 are secured together forming a plurality of packets (not depicted). These packets may in turn be secured together by a conventional securing means such as bolts, adhesives, rivets, stapling, stitching and the like.

In FIGs 1 and 2, stitches 14 and 16 are utilized to secure fibrous layers 12. The type of stitching employed may vary widely. Stitching and sewing methods such as lock stitching, chain stitching, zig-zag stitching and the like are illustrative of the type of stitching for use in this invention. An important feature of this invention is the tensile properties of the fiber used in stitching means 14 and 16. It has been found that a relatively high modulus (equal to or greater than 200 grams/denier (176.6 dN/tex)) and a relatively high tenacity (equal to or greater than 7 grams/denier (6.18 dN/tex)) fiber is essential for the beneficial effects of the invention. All tensile properties are evaluated by pulling a 10in (25.4cm) fiber length clamped in barrel clamps at a rate of 10 in/min (25.4cm/min) on an Instron Tensile Tester. In the preferred embodiments of the invention, the tensile modulus is from 400 to 3000 grams/denier (353.2 to 2649 dN/tex) and the tenacity is from 20 to 50 grams/denier (17.66 to 44.15 dN/tex), more preferably the tensile modulus is from 1000 to 3000 grams/denier (883 to 2649 dN/tex) and the tenacity is from 25 to 50 grams/denier (22.1 to 44.15 dN/tex) and most preferably the tensile modulus is from 1500 to 3000 grams/denier (1324.5 to 2649 dN/tex) and the tenacity is from 30 to 50 grams/denier (26.5 to 44.15 dN/tex).

Useful threads and fibers may vary widely and will be described in more detail herein below in the discussion of fiber for use in the fabrication of fibrous layers 12. However, the thread or fiber used in stitching means 14 and 16 is preferably an aramid fiber or thread (as for example Kevlar® 29, 49, 129 and 149 aramid fibers), an extended chain polyethylene thread or fiber (as for example Spectra® 900 and Spectra® 1000 polyethylene fibers) or a mixture thereof. In the embodiments of the invention depicted in Figures 1 and 2, the weight percent of the thread in having a longitudinal axis perpendicular to the plan of layers 12 is preferably at least 2% by wgt, more preferably from 2 to 20% by wgt. and most preferably from 4 to 15% by wgt. All weight percents are based on the total weight of the article.

The distance between adjacent stitching means 14 and 16 may vary widely. Such distance is preferably less than 1/8 in (0.3175 cm). In general, the lower limit to the spacing between adjacent stitching means 14 to 16 is not critical and theoretically such adjacent stitching means 14 to 16 can be as close as possible. However, for practical reasons and for convenience, the distance is usually not less than about 1/64 in (0.40mm). In the preferred embodiments of the invention, the spacing between securing means 14 and 16 is from about 1/32 in (0.79mm) to about 1/10 in (2.5mm). More preferred preferred spacings are from about 1/16 in (1.6 mm) to about 1/10 in (2.5mm) and most preferred spacings are from about 1/16 in (2.5mm) to about 1/12 in (2.1mm).

The stitches 14 and 16 may be a continuous interconnection of various layers 12 where stitches 14 and 16 do not include any region where the various layers 12 are not interconnected. Stitching means 14 and 16 may also be discontinuous, comprised of parts where the various layers 12 are interconnected and other regions where there are no such interconnections. The distance between various elements of stitches means 14 and 16 is the stitch length which can vary widely. In the preferred embodiments of the invention the stitch length is less than about 6.4mm. In general, the lower limit may vary widely. More preferred stitch lengths are less than about 4mm, more preferred stitch lengths are from about 1 to about 4mm with the stitch lengths choice being from about 2.5 to about 3.5mm.

In the illustrative embodiment of FIG.s 1 and 2, article 10 has been depicted with two sets of adjacent and substantially parallel stitches 14 and substantially parallel stitches 16 which are orthogonal with respect to each other intersecting at 90° angles forming a plurality of substantially rectangular or square shaped patterns on the surface of article 10 in which the stitches are separated by a distance of which in the preferred embodiments of the invention is less than 1/8 in (0.3175 cm.), more preferably about 3.2 mm. This represents the most preferred aspects of the invention. It is contemplated that a single set of stitches can be employed. Moreover, the paths need not be parallel and may intersect other than at right angles.

Fibrous layer 12 comprises a network of fibers. For purposes of the present invention, fiber is defined as an elongated body, the length dimension of which is much greater than the dimensions of width and thickness. Accordingly, the term fiber as used herein includes a monofilament elongated body, a multifilament elongated body, ribbon, strip and the like having regular or irregular cross sections. The term fibers includes a plurality of any one or combination of the above.

The cross-section of fibers for use in this invention may vary widely. Useful fibers may have a circular cross-section, oblong cross-section or irregular or regular multi-lobal cross-section having one or more regular or irregular lobes projecting from the linear or longitudinal axis of the fibers. In the particularly preferred embodiments of the invention, the fibers are of substantially circular or oblong cross-section and in the most preferred embodiments are of circular or substantially circular cross-section.

Fibrous layer 12 may be formed from fibers alone, or from fibers coated with a suitable polymer, as for example, polyolefins, vinyl esters, phenolics allylics, silicons, polyamides, polyesters, polydiene such as a polybutadiene, polyurethanes, and the like. Fibrous layer 14 may also comprise a network of fibers dispersed in a polymeric matrix as for example a matrix of one or more of the above referenced polymers to form a flexible composite as described in more detail in U.S. Patent Nos. 4,623,574; 4,748,064; 4,916,000; 4,403,012; 4,457,985; 4,650,710; 4,681,792; 4,737,401; 4,543,286; 4,563,392; and 4,501,856. Regardless of the construction, fibrous layer 14 is such that article 10 has the required degree of flexibility.

The fibers in fibrous layer 12 may be arranged in networks having various configurations. For example, a plurality of filaments can be grouped together to form twisted or untwisted yarn bundles in various alignments. The filaments or yarn may be formed as a felt, knitted or woven (plain, basket, satin and crow feet weaves, etc.)into a network, fabricated into non-woven fabric, arranged in parallel array, layered, or formed into a woven fabric by any of a variety of conventional techniques. Among these techniques, for ballistic resistance applications we prefer to use those variations commonly employed in the preparation of aramid fabrics for ballistic-resistant articles. For example, the techniques described in U.S. Patent No. 4,181,768 and in M.R. Silyquist et al., J. Macromol Sci. Chem., A7(1), pp. 203 et. seq. (1973) are particularly suitable.

The construction of fibrous layer 12 also influences the resistance to displacement of the fibers in fibrous layer 12. By fiber layer construction, we consider such features as, for example, consolidated v. non-consolidated layers, heat set v. non-heat set layers, twisted fiber v. non-twisted fiber-containing layers, woven v. non-woven layer weave type and density, and fiber density.

The type of fiber used in the fabrication of fibrous layer 12 may vary widely and can be any organic or inorganic fibers capable of use in a fibrous layer. Preferred fibers for use in the practice of this invention are those having a tenacity equal to or greater than 10 grams/denier (g/d) (8.83 dN/tex), a tensile modulus equal to or greater than 150 g/d (132.5 dN/tex) and an energy-to-break equal to or greater than 30 joules/grams. The tensile properties are determined by an Instron Tensile Tester by pulling a 10 in (25.4cm) fiber length, clamped in barrel clamps at a rate of 10 in/min (25.4cm/min). Among these particularly preferred embodiments, most preferred are those embodiments in which the tenacity of the fiber is equal to or greater than 25 g/d (22.1 g/den), the tensile modulus is equal to or greater than 1000 g/d (883 dN/tex), and the energy-to-break is equal to or greater than 35 joules/grams. In the practice of this invention, fibers of choice have a tenacity equal to or greater than 30 g/d (26.5 dN/tex), the tensile modulus is equal to or greater than 1300 g/d (1147.9 dN/tex) and the energy-to-break is equal to or greater than 40 joules/grams.

The denier of the fiber may vary widely. In general, fiber denier is equal to or less than 4000 (36000 tex). In the preferred embodiments of the invention, fiber denier is from 10 to 4000 (90 to 36000 tex), the more preferred embodiments of the invention fiber denier is from 10 to 1000 (90 to 9000 tex) and in the most preferred embodiments of the invention, fiber denier is from 10 to 400 (90 to 3600 tex).

Useful inorganic fibers include S-glass fibers, E-glass fibers, carbon fibers, boron fibers, alumina fibers, zirconia silica fibers, alumina-silicate fibers and the like.

Illustrative of useful organic fibers are those composed of polyesters, polyolefins, polyetheramides, fluoropolymers, polyethers, celluloses, phenolics, polyesteramides, polyurethanes, epoxies, aminoplastics, polysulfones, polyetherketones, polyetherether-ketones, polyesterimides, polyphenylene sulfides, polyether acryl ketones, poly(amideimides), and polyimides. Illustrative of other useful organic filaments are those composed of aramids (aromatic polyamides), such as poly(m-xylylene adipamide), poly)p-xylyene sebacamide) poly 2,2,2-trimethyl-hexamethylene terephthalamide) (Kevlar); aliphatic and cycloaliphatic polyamides, such as the copolyamide of 30% hexamethylene diammonium isophthalate and 70% hexamethylene diammonium adipate, the copolyamide of up to 30% bis-(-amidocyclohexyl)methylene, terephthalic acid and caprolactam, polyhexamethylene adipamide (nylon 66), poly(butyrolactam) (nylon 4), poly (9-aminonoanoic acid) (nylon 9), poly(enantholactam) (nylon 7), poly(capryllactam) (nylon 8), polycaprolactam (nylon 6), poly (p-phenylene terephthalamide), polyhexamethylene sebacamide (nylon 6,10), polyaminoundecanamide(nylon 11), polydodeconolactam (nylon 12), polyhexamethylene isophthalamide, polyhexamethylene terephthalamide, polycaproamide, poly(nonamethylene azelamide) (nylon 9,9), poly(decamethylene azelamide) (nylon 10,9), poly(decamethylene sebacamide) (nylon 10,10), poly[bis-(4-aminocyclothexyl) methane 1,10-decanedicarboxamide] methane 1,10-decanedicarboxamide] (Qiana) (trans), or combination thereof; and aliphatic, cycloaliphatic and aromatic polyesters such as poly (1,4-cyclohexlidene dimethyleneterephathalate) cis and trans, poly(ethylene-1 5-naphthalate), poly (ethylene-2, 6-naphthalate), poly (1,4-cyclohexane dimethylene terephthalate) trans, poly (decamethylene terephthalate), poly(ethylene terephthalate), poly(ethylene isophthalate), poly(ethylene oxybenzoate), poly(para-hydroxy benzoate), poly(dimethylpropiolactone), poly(decamethylene adipate), poly(ethylene succinate), poly(ethylene azelate), poly(decamethylene sebacate), poly-dimethylpropiolactone), and the like.

Also illustrative of useful organic filaments are those of liquid crystalline polymers such as lyotropic liquid crystalline polymers which include polypeptides such as polyγ-benzyl L-glutamate and the like; aromatic polyamides such as poly(1,4-benzamide), poly(chloro-1,4-phenylene terephthalamide), poly(1,4-phenylene fumaramide), poly(chloro-1,4-phenylene fumaramide), poly(4,4'-benzanilide trans, trans-muconamide), poly (1,4-phenylene mesaconamide), poly(1,4-phenylene) (trans-1,4-cyclohexylene amide), poly (chloro-1,4-phenylene 2, 5-pyridine amide), poly(3. 3'-dimethyl-4, 4'- biphenylene 2. 5 pyridine amide), poly (1,4-phenylene 4, 4'-stilbene amide), poly (chloro-1,4-phenylene 4,4'-stilbene amide), poly(chloro-1, 4-phenylene 4,4'-stilbene amide), poly(1,4-phenylene 4, 4''-azobenzene amide), poly(4,4'-azobenzene 4,4'-azobenzene amide), poly(1,4-phenylene 4,4'-azoxybenzene amide), poly(4,4'-azobenzene 4,4'-azoxybenzene amide), poly(1,4-cyclohexylene 4,4'-azobenzene amide), poly(4,4'-azobenzene terephthal amide), poly(3, 8-phenanthridinone terephthal amide), poly(4,4'-biphenylene terephthal amide), poly(4,4'-biphenylene 4,4'-bibenzo amide), poly(1,4-phenylene 4,4'-bibenzo amide), poly(1,4-phenylene 4,4'-terephenylene amide), poly(1,4-phenylene 2,6-naphthal amide), poly(1,5-naphthylene terephthal amide), poly (3,3'-dimethyl-4,4-biphenylene terephthal amide), poly(3,3'-dimethoxy-4,4'-biphenylene terephthal amide), poly(3,3'-dimethoxy-4,4-biphenylene - bibenzo amide) and the like; polyoxamides such as those derived from 2,2' dimethyl-4,4'diamino biphenyl and chloro-1,4-phenylene diamine; polyhydrazides such as poly chloroterephthalic hydrozide, 2,5-pyridine dicarboxylic acid hydrazide) poly(terephthalic hydrazide), poly(terephthalic-chloroterephthalic hydrazide) and the like; poly(amide-hydrazides) such as poly (terephthaloyl 1,4 amino-benzhydrazide) and those prepared from 4-amino-benzhydrazide, oxalic dihydrazide, terephthalic dihydrazide and para-aromatic diacid chlorides; polyesters such as those of the compositions include poly(oxy-trans-1,4-cyclohexyleneoxycarbonyl-trans-1,4-cyclohexylenecarbonyl-trans-1,4-phenyleneoxyterephthal oyl) in methylene chloride-o-cresol poly(oxy-trans-1,4-cyclohexylene-oxycarbonyl-trans-1,4 -cyclohexylenecarbonyl-β-oxy-(20methyl 1,4-phenylene)oxy-terephthaloyl)] in 1,1,2,2-tetrachloro-ethane-o-cyclohexyleneoxycarbonyl-trans-1,4-cyclohexylenecarbonyl-b-oxy(2-methyl-1,3-phe nylene)oxy-terephthaloyl] in o-chlorophenol and the like; polyazomethines such as those prepared from 4,4'-diaminobenzanilide and terephthalaldehyde, methyl-1,4-phenylenediamine and terephthaldelyde and the like; polyisocyanides such as poly(-phenyl ethyl isocyanide), poly(n-octyl isocyanide) and the like; polyisocyanates such as poly (n-alkyl isocyanates) as for example poly(n-butyl isocyanate), poly(n-hexyl isocyanate) and the like; lyotropic crystalline polymers with heterocyclic units such as poly(1,4-phenylene-2,6-benzobisoxazole)(PBO), poly(1,4-phenylene-1,3,4-oxadiazole), poly(1,4-phenylene-2,6-benzobisimidazole), poly[2,5(6)-benzimidazole] (AB-PBI), poly[2,6-(1,4-phenylene)-4-phenylquinoline], poly[1,1'-biphenylene)-6,6'-bis(4-phenylquinoline)] and the like; polyorganophosphazines such as polyphosphazine, polybisphenoxyphosphazine, poly]bis(2,2,2'trifluoroethylene) phosphazine and the like metal polymers such as those derived by condensation of trans-bis (tri-n-butylphosphine) platinum dichloride with a bisacetylene or trans-bis(tri-n-butylphosphine)bis(1,4-butadienyl)plat inum and similar combinations in the presence of cuprous iodine and an amide; cellulose and cellulose derivatives such as esters of cellulose as for example triacetate cellulose, acetate cellulose, acetate-butyrate cellulose, nitrate cellulose, and sulfate cellulose, ethers of cellulose as for example, ethyl ether cellulose, hydroxymethyl ether cellulose, hydroxypropyl ether cellulose, carboxymethyl ether cellulose, ethyl hydroxyethyl ether cellulose, cyanoethylethyl ether cellulose, ether-esters of cellulose as for example acetoxyethyl ether cellulose and benzoyloxypropyl ether cellulose, and urethane cellulose as for example phenyl urethane cellulose; thermotropic liquid crystalline polymers such as celluloses and their derivatives as for example hydroxypropyl cellulose, ethyl cellulose propionoxypropyl cellulose, thermotropic liquid crystalline polymers such as celluloses and their derivatives as for example hydroxypropyl cellulose, ethyl cellulose propionoxypropyl cellulose; thermotropic copolyesters as for example copolymers of 6-hydroxy-2-naphthoic acid and p-hydroxy benzoic acid, copolymers of 6-hydroxy-2-naphthoic acid, terephthalic acid and p-amino phenol, copolymers and 6-hydroxy-2-naphthoic acid, terephthalic acid and hydroquinone, copolymers of 6-hydroxy-2-naphthoic acid, p-hydroxy benzoic acid, hydroquinone and terephthalic acid, copolymers of 2,6-naphthalene dicarboxylic acid, terephthalic acid, isophthalic acid and hydroquinone, copolymers of 2,6-napthalene dicarboxylic acid and terephthalic acid, copolymers of p-hydroxybenzoic acid, terephthalic acid and 4,4'-dihydroxydiphenyl, copolymers of p-hydroxybenzoic acid, terephthalic acid, isophthalic acid and 4,4'-dihydroxydiphenyl, p-hydroxybenzoic acid, isophthalic acid, hydroquinone and 4,4'-dihydroxybenzophenone, copolymers of phenylterephthalic acid and hydroquinone, copolymers of chlorohydroquinone, terephthalic acid and p-acetoxy cinnamic acid, copolymers of chlorophydroquinone, terephthalic acid and ethylene dioxy-4,4'-dibenzoic acid, copolymers of hydroquinone, methylhydroquinone, p-hydroxybenzoic acid and isophthalic acid, copolymers of (1-phenylethyl)hydroquinone, terephthalic acid and hydroquinone, and copolymers of poly(ethylene terephthalate) and p-hydroxybenzoic acid; and thermotropic polyamides and thermotropic copoly(amide-esters).

Also illustrative of useful organic filaments for use in the fabrication of fibrous layer 14 are those composed of extended chain polymers formed by polymerization of α, β-unsaturated monomers of the formula:

R₁R₂-C = CH₂

wherein:
R₁ and R₂ are the same or different and are hydrogen, hydroxy, halogen, alkylcarbonyl, carboxy, alkoxycarbonyl, heterocycle or alkyl or aryl either unsubstituted or substituted with one or more substituents selected from the group consisting of alkoxy, cyano, hydroxy, alkyl and aryl. Illustrative of such polymers of α ,β-unsaturated monomers are polymers including polystyrene, polyethylene, polypropylene, poly(1-octadecene), polyisobutylene, poly(1-pentene), poly(2-methylstyrene), poly(4-methylstyrene), poly(1-hexene), poly(1-pentene), poly(4-methoxystyrene, poly(5-methyl-1-hexene), poly(4-methylpentene), poly (1-butene), polyvinyl chloride, polybutylene, polyacrylonitrile, poly(methyl pentene-1), poly(vinyl alcohol), poly(vinyl acetate), poly(vinyl butyral), poly(vinyl chloride), poly(vinylidene chloride), vinyl chloride-vinyl acetate chloride copolymer, poly(vinylidene fluoride), poly(methyl acrylate), poly(methyl methacrylate), poly(methacrylonitrile), poly(acrylamide), poly(vinyl fluoride), poly(vinyl formal), poly (3-methyl-1-butene), poly(1-pentene), poly(4-methyl-1-butene), poly(1-pentene), poly(4-methyl-1-pentene, poly (1-hexane) poly(5-methyl-1-hexene), poly(1-octadecene), poly(vinyl-cyclopentane), poly(vinylcyclothexane), poly(α-vinyl-naphthalene), poly(vinyl methyl ether), Poly(vinyl-ethylether), poly(vinyl propylether), poly(vinyl carbazole), poly(vinyl pyrrolidone), poly(2-chlorostyrene), poly(4-chlorostyrene), poly(vinyl formate), poly(vinyl butyl ether), poly(vinyl octyl ether), poly(vinyl methyl ketone), poly(methyl-isopropenyl ketone), poly(4-phenylstyrene) and the like.

In the most preferred embodiments of the invention, composite articles include a fiber network, which may include a high molecular weight polyethylene fiber, a high molecular weight polypropylene fiber, an aramide fiber, a high molecular weight polyvinyl alcohol fiber, a liquid crystalline polymer such as liquid crystalline copolyester and mixtures thereof. USP 4,457,985 generally discusses such high molecular weight polyethylene and polypropylene filaments, and the disclosure of this patent is hereby incorporated by reference to the extent that it is not inconsistent herewith. In the case of polyethylene, suitable fibers are those of molecular weight of at least 150,000, preferably at least one million and more preferably between two million and five million. Such extended chain polyethylene (ECPE) fibers may be grown in solution as described in U.S.Patent No. 4,137,394, or U.S.Patent No. 4,356,138, or a filament spun from a solution to form a gel structure, as described in DE-A-3,004,699 and GB 2051667, and especially described in U.S Patent No. 4,551,296 (see EPA 64,167). As used herein, the term polyethylene shall mean a predominantly linear polyethylene material that may contain minor amounts of chain branching or comonomers not exceeding 5 modifying units per 100 main chain carbon atoms, and that may also contain admixed therewith not more than 50 wt% of one or more polymeric additives such as alkene-1-polymers, in particular low density polyethylene, polypropylene or polybutylene, copolymers containing mono-olefins as primary monomers, oxidized polyolefins, graft polyolefin copolymers and polyoxymethylenes, or low molecular weight additives such as anti-oxidants, lubricants, ultra-violet screening agents, colorants and the like which are commonly incorporated by reference. Depending upon the formation technique, the draw ratio, temperatures, and other conditions, a variety of properties can be imparted to these fibers. The tenacity of the fibers should be at least 15 grams/denier (13.2 dN/tex), preferably at least 20 grams/denier (17.7 dN/tex), more preferably at least 25 grams/denier (22.1 dN/tex) and most preferably at least 30 grams/denier (26.5 dN/tex). Similarly, the tensile modulus of the fibers, as measured by an Instron tensile testing machine, is at least 300 grams/denier (264.9 dN/tex), preferably at least 500 grams/denier (441.5 dN/tex) and more preferably at least 1,000 grams/denier (883 dN/tex) and most preferably at least 1,200 grams/denier (1059.6 dN/tex). These highest values for tensile modulus and tenacity are generally obtainable only by employing solution grown or gel fiber processes.

Similarly, highly oriented polypropylene fibers of molecular weight at least 200,000, preferably at least one million and more preferably at least two million may be used. Such high molecular weight polypropylene may be formed into reasonably well oriented fibers by the techniques prescribed in the various references referred to above, and especially by the technique of U.S. Patent No. 4,551,296. Since polypropylene is a much less crystalline material than polyethylene and contains pendant methyl groups, tenacity values achievable with polypropylene are generally substantially lower than the corresponding value for polyethylene. Accordingly, a suitable tenacity is at least 8 grams/denier (7.1 dN/tex), with a preferred tenacity being at least 11 grams/denier (9.7 dN/tex). The tensile modulus for polypropylene is at least 160 grams/denier (141.3 dN/tex) preferably at least 200 grams/denier (176.6 dN/tex). The particularly preferred ranges for the above-described parameters can advantageously provide improved performance in the final article.

High molecular weight polyvinyl alcohol fibers having high tensile modulus are described in USP 4,440,711. In the case of polyvinyl alcohol (PV-OH), PV-OH fiber of molecular weight of at least 200,000.

Particularly useful PV-OH fiber should have a modulus of at least 300 g/d (264.9 dN/tex), a tenacity of at least 7 g/d (6.2 dN/tex), (preferably at least 10 g/d (8.8 dN/tex), more preferably at 14 g/d (12.4 dN/tex), and most preferably at least 17 g/d (15.0 dN/tex)), and an energy-to-break of at least 8 joules/gram. PV-OH fibers having a weight average molecular weight of at least 200,000, a tenacity of at least (8.8 dN/tex) 10 g/d, a modulus of at least 300 g/d (264.9 dN/tex), and an energy-to-break of 8 joules/gram are more useful in producing a ballistic resistant article. PV-OH filament having such properties can be produced, for example, by the process disclosed in U.S. Patent No. 4,599,267.

In the case of aramid fibers, suitable aramid fibers formed principally from aromatic polyamide are described in U.S. Patent No. 3,671,542. Preferred aramid fiber will have a tenacity of at least 20 g/d (17.7 dN/tex) a tensile modulus of at least 400 g/d (353.2 dN/tex) and an energy-to-break at least 8 joules/gram, and particularly preferred aramid fibers will have a tenacity of at least 20 g/d (17.7 dN/tex), a modulus of at least 480 g/d (423.8 dN/tex) and an energy-to-break of at least 20 joules/gram. Most preferred aramid fibers will have a tenacity of at least 20 g/denier (17.7 dN/tex), a modulus of at least 900 g/denier (794.7 dN/tex) and an energy-to-break of at least 30 joules/gram. For example, poly(phenylene terephthalamide) fibers produced commercially by Dupont Corporation under the trade name of Kevlar® 29, 49, 129 and 149 having moderately high moduli and tenacity values are particularly useful in forming ballistic resistant composites. Also useful in the practice of this invention is poly(metaphenylene isophthalamide) fibers produced commercially by Dupont under the trade name Nomex®.

In the case of liquid crystal copolyesters, suitable fibers are disclosed, for example, in U.S. Patents Nos. 3,975,487; 4,118,372; and 4,161,470. Tenacities of 15 to 30 g/d (13.2 to 26.5 dN/tex) and preferably 20 to 25 g/d (17.7 to 22.1 dN/tex), and modulus of 500 to 1500 g/d (441.5 to 1324.5 dN/tex) and preferably 1000 to 1200 g/d (883 to 1059.6 dN/tex), are particularly desirable.

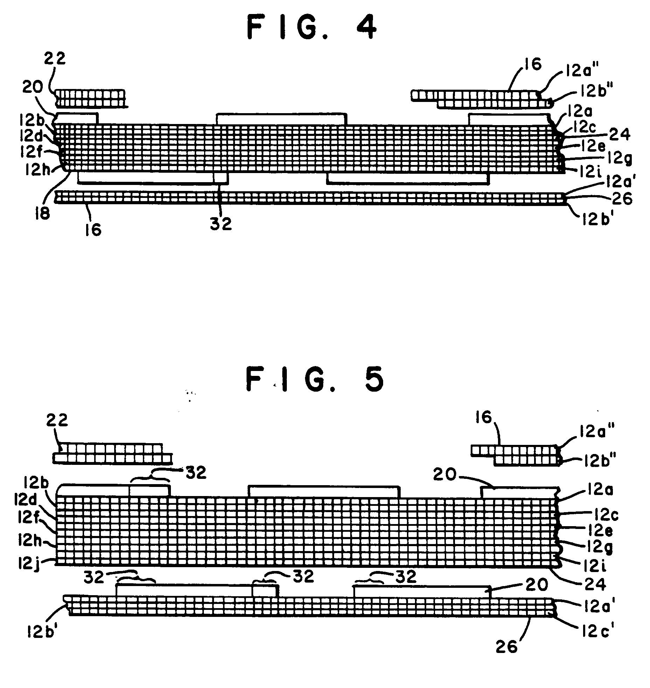

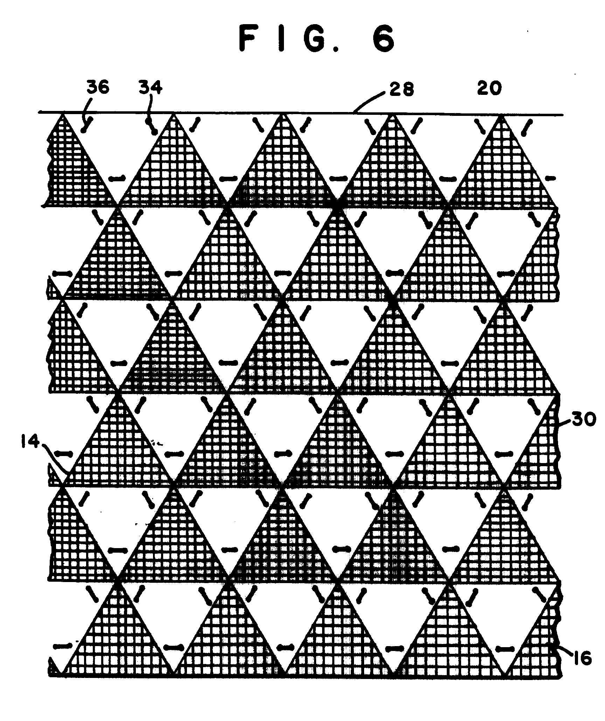

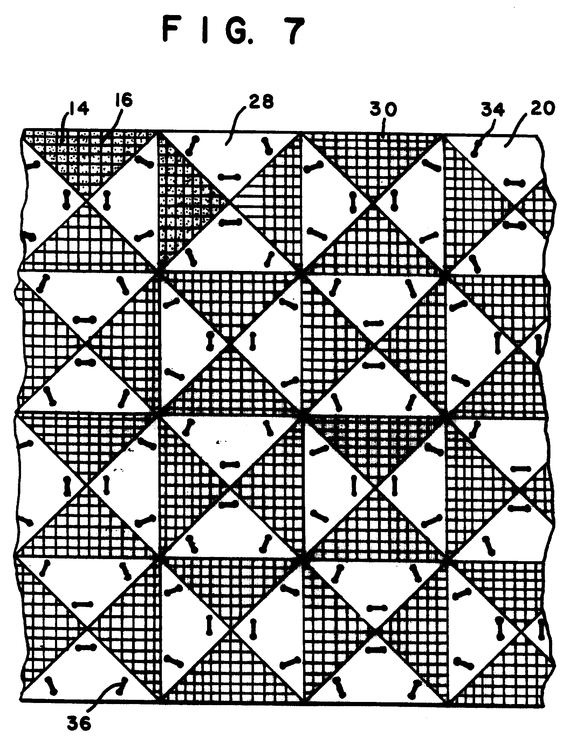

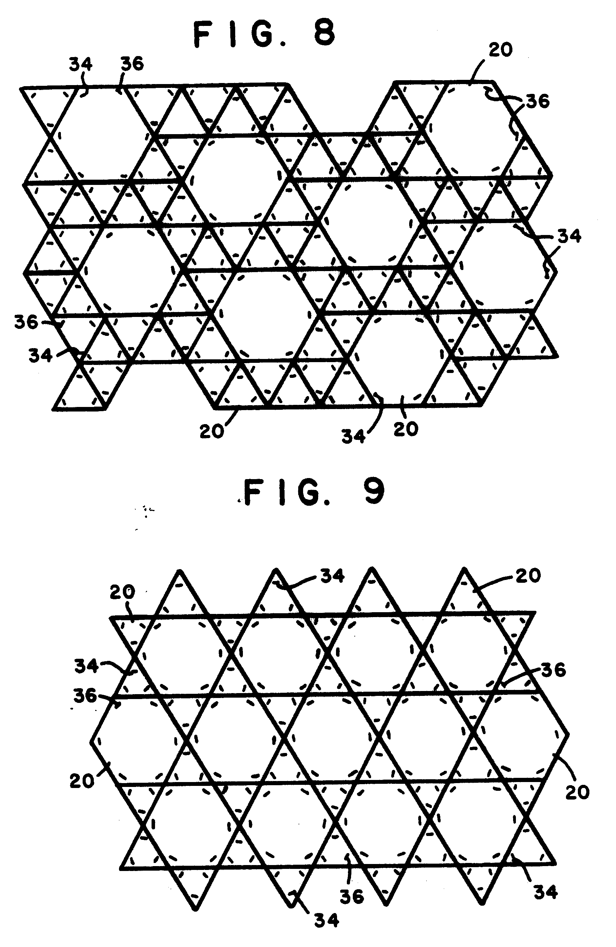

FIGs 3 depicts an article 18 which differs from article 10 by the addition of a plurality of substantially planar or planar bodies 20 of various geometrical shapes which are affixed to both surfaces of a plurality of layers 12 or to one surface of two or more layers 12. FIGs 4 and 5 are fragmentary cross-sectional views of the embodiments of FIG 3 on 4-4' and FIGS 7 and 8 are exploded fragmentary frontal views of the embodiments of FIG 5. As a ballistic missile impacts a planar body 20, the missile can be broken and/or enlarged and flattened to increase its impact area and decrease the velocity of the missile.

As depicted in FIG 3, 5 and 6 in cross-section, article 18 comprises three distinct layers 22, 24 and 26, each consisting of a plurality of fibrous layers 12, stitched together by horizontal stitches 14 and vertical stitches 16 (not depicted). Layer 22 is the outer layer which is exposed to the environment, and layer 26 is the inner layer closest to the body of the wearer. The two covering layers 22 and 26 sandwich a ballistic layer 24, which, in the body armor of the figures comprises a plurality of stitched layers 12 having a plurality of planar bodies 20 partially covering both outer surfaces of said plurality of layers 12 forming a pattern of covered areas 28 and uncovered areas 30 on the outer surfaces. As shown in FIG 3, the plurality of planar bodies 20 are positioned on the two surfaces such that the covered areas 28 on one surface are aligned with the uncovered areas 30 on the other surface. In the preferred embodiments of the invention depicted in FIG 3, each planar body 20 is uniformly larger than its corresponding uncovered area 30 such that planar bodies 20 adjacent to an uncovered area 30 partially overlap with the corresponding planar body 20 (of the area 30) on the other outer surface of the plurality of layers 12 by some portion 32. The degree of overlap may vary widely, but in general is such that preferably more than about 90 area %, more preferably more than about 95 area% and most preferably more than about 99 area % of the uncovered areas 30 on an outer surface of the plurality of layers 12 are covered by its corresponding planar body 20 on the other outer surface of the plurality of layers 12.

FIG 4 depicts a variant of the embodiment of FIG 3 which differs by placing planar bodies 20 on a surface of layer 26 and on a surface of layer 24. Corresponding parts are referred to by like numerals.

As shown in the Figures, the position of planar bodies 20 can vary widely. For example, planar bodies 20 may be on an outside surface of a fibrous layer 12 or may be encapsulated inside of the plurality of fibrous layers 12 on interior surfaces. As depicted in FIGs 3 to 7, planar bodies 20 are preferably space filling and will provide more than one, preferably two or three and more preferably three semi-continuous or continuous seams in different directions which preferably intersect at an angle with each other (more preferably at an angle of about 60°) in order to allow flexing in multiple directions.

Fixation of planar bodies 20 to a fibrous layer 12 as continuous sheet may cause stiffening of the structure reducing its flexiblity. Although for certain applications this may be acceptable provided that article 10 has the required degree of flexibility, for many applications where relatively high penetration resistance and flexibility are desired, such as a ballistic resistant vest, it is desirable to affix planar bodies 20 to the fibrous layer 12 such that the desired flexibility is obtained. This is preferably accomplished by affixing planar bodies 20 as discontinuous geometric shapes. Preferred geometric shapes will be space filling and will preferably provide substantially continuous seams having three different directions to allow flexing in multiple directions, as depicted in FIGs 6 and 7. A preferred construction consists of planar bodies 20 in the shape of triangles (preferably right and equilateral triangles and more preferably equilateral triangles) which are arranged to be space filling as depicted in FIGs 6 and 7. A desirable modification to this construction is the inclusion of compatible geometric shapes such as hexagons, parallelograms, trapezoids and the like, which correspond to shapes obtainable by fusion of two or more triangles at appropriate edges. The most preferred compatible shapes are hexagons as depicted in FIGS. 8 and 9. It should be noted that while in FIGs 7 and 8, the hexagonal and triangular shaped bodies are positioned on the same surface of layer 12 such positioning is not critical, and such bodies can be conveniently placed on more than one surface as for example in FIGs 3 to 6. As shown in FIG 10, in the more preferred embodiments of the invention, planar bodies 18 are truncated or rounded at the apexes and preferably includes eyes 34 for stitching planar bodies 20 to a surface of layer 12 by way of stiches 36. In these embodiments, curvilinear planar bodies 20 such as circular or oval shaped bodies are positioned at the truncated apexes to provide for additional penetration resistance. Alternatively, a mixture of totally or partially truncated planar bodies 20, and partially truncated or untruncated planar bodies 20 can be used in which the open areas at the truncated ends can be covered by the untruncated ends of the adjacent partially truncated or untruncated planar bodies 20. Such space filling constructions allow a wide range of compromises between flexibility and minimization of seams, and maximization of penetration resistance.

An alternative to discontinuous geometric shapes is the use of relatively rigid penetration resistant planar bodies 20 containing slits preforations and the like. The use of slits, perforations and the like can provide for enhanced ballistic protection while at the same time not affecting the flexibility of the ballistic article to a significant extent. It is desirable that slits, perforations and the like be aligned so that there are three or more directions along which planar bodies 20 can easily flex, in an analogous manner to that described previously for the individual geometric shapes.

The position of planar bodies 20 can vary widely. For example, planar bodies 20 may be on an outside surface of a fibrous layer 12 or may be encapsulated inside of the plurality of fibrous layer 12 on an interior surface. As depicted in FIGs 3 to 4, planar bodies 20 are preferably space filling and will provide one, two or three continuous seam directions preferably, two and more preferably three or more continuous seams in order to allow flexing in multiple directions.

As shown in FIG. 3, 4 and 5 in the preferred embodiments of this invention, article 20 includes a plurality of fibrous layers 12 in which rigid substantially planar bodies 20 in adjacent layers 12 are offset to provide for continous and overlapping rigid ballistic protection.

In these embodiments, as shown in FIGs 4 to 7 article 18 preferably includes at least two layers 12 in which each layer 12 is partially covered with planar bodies 20, preferably forming an alternating pattern of covered areas 28 and uncovered areas 30. These layers are positioned in article 18 such that uncovered areas 30 of one layer 12 are aligned with covered areas 28 of another layer 12 (preferably an adjacent layer) providing for partial or complete coverage of the uncovered areas of one layer 12 by the covered areas of an another layer 12. Alternatively, another preferred embodiment as depicted in FIGs 3, 4, 5 and 6 includes a layer 12 in which each side of the layer is partially covered with bodies 20 and where the bodies are positioned such that the covered areas 28 on one side of the layer are aligned with the uncovered areas 30 on the other side of the layer. In the preferred embodiments of the invention, the surface of layer 12 is covered with planar bodies 20 such that the bodies are uniformly larger than the uncovered mated surface of the other layers 12 or the other surface of the same layer providing for complete overlap. This is preferably accomplished by truncation of the edges of the bodies 20 or otherwise modification of such edges to allow for closer placement of bodies 20 on the surface such that a covered area is larger than the complimentary uncovered area 30. Extensive disalignment between the various fibrous layers 12, is prevented by the securing means 14 and 16.

The shape of planar bodies 20 may vary widely. For example, planar bodies 20 may be of regular shapes such as hexagonal, triangular, square, octagonal, trapezoidal, parallelogram and the like, or may be irregular shaped bodies of any shape or form. In the preferred embodiments of the invention, planar bodies 20 are of regular shape and in the more preferred embodiments of the invention planar bodies (preferably right triangles or equilateral triangles and more preferably equilateral triangles) 20 are triangular shaped bodies or a combination of triangular shaped bodies and hexagonal shaped bodies which provide for relative improved flexibility relative to ballistic article having planar bodies 20 of other shapes of equal area.

Means for attaching planar bodies 20 to fibrous layer 12 may vary widely and may include any means normally used in the art to provide this function. Illustrative of useful attaching means are adhesives such as those discussed in R.C. Liable, Ballistic Materials and Penetration Mechanics, Elsevier Scientific Publishing Co. (1980). Illustrative of other useful attaching means are bolts, screws, staples mechanical interlocks, stitching, or a combination of any of these conventional methods. As depicted in FIGs 6 and 7, in the preferred embodiments of the invention planar bodies 20 are stitched to the surface of layer 12 by way of stitches 36 and eyes 34. Optionally, the stitching may be supplemented by adhesive.

Planar bodies 20 are comprised of a rigid ballistic material which may vary widely depending on the uses of article 18. The term "rigid" as used in the present specification and claims is intended to include semi-flexible and semi-rigid structures that are not capable of being free standing, without collapsing. The materials employed in the fabrication of planar bodies 20 may vary widely and may be metallic materials semi-metallic materials, organic materials and/or an inorganic materials. Illustrative of such materials are those described in G.S. Brady and H.R. Clauser, Materials Handbook, 12th edition (1986).

Materials useful for fabrication of planar bodies include the ceramic materials. Illustrative of useful metal and non-metal ceramics are those described in F.F. Liable, Ballistic Materials and Penetration Mechanics, Chapters 5-7 (1980) and include single oxides such as aluminum oxide (Al₂O₃), barium oxide (BaO), beryllium oxide (BeO), calcium oxide (CaO), cerium oxide (Ce₂O₃ and CeO₂), chromium oxide (Cr₂O₃), dysprosium oxide (Dy₂O₃), erbium oxide (Er₂O₃), europium oxide: (EuO, Eu₂O₃, and Eu₂O₄), (Eu₁₆O₂₁), gadolinium oxide (Gd₂O₃), hafnium oxide (HfO₂), holmium oxide (Ho₂O₃), lanthanum oxide (La₂O₃), lutetium oxide (Lu₂O₃), magnesium oxide (MgO), neodymium oxide (Nd₂O₃), niobium oxide: (NbO, Nb₂O₃, and NbO₂), (Nb₂O₅), plutonium oxide; (PuO, Pu₂O₃, and PuO₂), praseodymium oxide: (PrO₂, Pr₆O₁₁, and Pr₂O₃), promethium oxide: Pm₂O₃), samarium oxide (SmO and Sm₂O₃), scandium oxide (Sc₂O₃), silicon dioxide (SiO₂), strontium oxide (S₄O), tantalum oxide (Ta₂O₅), terbium oxide (Tb₂O₃ and Tb₄O₇), thorium oxide (ThO₂), thulium oxide (Tm₂O₃), titanium oxide: (TiO, Ti₂O₃, Ti₃O₅ and TiO₂), uranium oxide (UO₂, U₃O₈ and Uo₃), vanadium oxide (VO, V₂O₃' Vo₂ and V₂O₅), ytterbium oxide (Yb₂O₃), yttrium oxide (Y₂O₃), and zirconium oxide (ZrO₂). Useful ceramic materials also include boron carbide, zirconium carbide, beryllium carbide, aluminum beride, aluminum carbide, boron carbide, silicon carbide, aluminum carbide, titanium nitride, boron nitride, titanium carbide titanium diboride, iron carbide, iron nitride, barium titanate, aluminum nitride, titanium niobate, boron carbide, silicon boride, barium titanate, silicon nitride, calcium titanate, tantalum carbide, graphites, tungsten; the ceramic alloys which include cordierite/MAS, lead zirconate titanate/PLZT, alumina-titanium carbide, alumina-zirconia, zirconia-cordierite/ZrMAS; the fiber reinforced ceramics and ceramic alloys; glassy ceramics; as well as other useful materials. Preferred ceramic materials are aluminum oxide, and metal and non-metal nitrides, borides and carbides.

Planar bodies 20 may also be formed from one or more thermoplastic materials, one or more thermosetting materials or a mixture thereof. Useful materials include relatively high modulus (equal to or greater about 6000 psi (41,300kPa)) polymeric materials such as polyamides as for example aramids, nylon-66, nylon-6 and the like; polyesters such as polyethylene terephthalate, polybutylene terephthalate, and the like; acetals; polysulfones; polyethersulfones; polyacrylates; acrylonitrile/butadiene/styrene copolymers; poly (amideimide); polycarbonates; polyphenylenesulfides; polyurethanes; polyphenylene oxides; polyester carbonates; polyesterimides; polyimides; polyetheretherketone; epoxy resins; phenolic resins; silicones; polyacrylates; polyacrylics; vinyl ester resins; modified phenolic resins; unsaturated polyester; allylic resins; alkyd resins; melamine and urea resins; polymer alloys and blends of thermoplastics and/or thermosetting resins and interpenetrating polymer networks such as those of polycyanate ester of a polyol such as the dicyanoester of bisphenol-A and a thermoplastic such as polysulfone.

Useful materials also include relatively low modulus polymeric materials (modulus less than about 6000 psi (41,300 kPa) as for example elastomeric materials. Representative examples of suitable elastomers have their structures, properties, formulations together with crosslinking procedures summarized in the Encyclopedia of Polymer Science, Volume 5 in the section Elastomers-Synthetic (John Wiley & Sons Inc., 1964). For example, any of the following materials may be employed: polybutadiene, polyisoprene, natural rubber, ethylene-propylene copolymers, ethylene-propylene-diene terpolymers, polysulfide polymers, polyurethane elastomers, chlorosulfonated polyethylene, polychloroprene, plasticized polyvinylchloride using dioctyl phthalate or other plasticers well known in the art, butadiene acrylonitrile elastometers, poly (isobutylene-co-isoprene), polyacrylates, polyesters, polyether, fluoroelastomers, silicone elastomers, thermoplastic elastomers,copolymers of ethylene and conjugated monomers such as or butadiene and isoprene or a vinyl aromatic monomer such as styrene, vinyl toluene or t-butyl styrene.

These polymeric materials may be reinforced by high strength fibers described above for use in the fabrication of fibrous layer 12, for example, organic filaments such as aramid fibers, nylon fibers, polyethylene fibers and mixtures thereof, and inorganic, metallic or semimetallic filaments such as boron fibers, E-glass fibers, S-glass fibers, ceramic fibers, carbon and graphite fibers, and the like. In these embodiments of the invention, the fibers are dispersed in a continuous phase of a matrix material which preferably substantially coats each filament contained in the bundle of filament. The manner in which the fibers are dispersed may vary widely. The fibers may have varying configurations of the fibrous network in fibrous layer 12. For example, the fibers may be in the form of woven or non-woven fabrics. The fibers may be aligned in a substantially parallel, undirectional fashion, or fibers may by aligned in a multidirectional fashion, or fibers may by aligned in a multidirectional fashion with fibers at varying angles with each other. In the preferred embodiments of this invention, fibers in each layer are aligned in a substantially parallel, unidirectional fashion such as in a prepreg, pultruded sheet and the like. One such suitable arrangement is where the planar bodies 20 comprises a plurality of layers or laminates in which the coated fibers are arranged in a sheet-like array and aligned parallel to one another along a common fiber direction. Successive layers of such coated, uni-directional fibers are rotated with respect to the previous layer. An example of such laminate structures are composites with the second, third, fourth, fifth layers etc. rotated +45°, -45°, 90° and 0°, with respect to the first layer, but not necessarily in that order. Other examples include composites with 0°/90° layout of yarn or filaments. Techniques and materials for fabricating these laminated structures are described in greater detail in U.S Patent Nos. 4, 916,000; 4,623,547; 4,748,064; 4,457,985 and 4,403,012

Useful materials for fabrication of bodies 20 also include metals such as nickel, manganese, tungsten, magnesium, titanium, aluminum and steel plate and the like. Illustrative of useful steels are carbon steels which include mild steels of grades AISI 1005 to AISI 1030, medium-carbon steels or the grades AISI 1030 to AISI 1055, high-carbon steels of the grades AISI 1060 to ISI 1095, free-machining steels, low-temperature carbon steels, rail steel, and superplastic steels; high-speed steels such as tungsten steels, and cobalt steels; hot-die steels; low-alloy steels; low expansion alloys; mold-steel; nitriding steels for example those composed of low-and medium-carbon steels in combination with chromium and aluminum, or nickel, chromium, and aluminum; silicon steel such as transformer steel and silicon-manganese steel; ultrahigh-strength steels such as medium-carbon low alloy steels, chromium-molybdenum steel, chromium-nickel-molybdenum steel, iron-chromium-molybdenum-cobalt steel, quenched-and-tempered teels, cold-worked high-carbon steel; and stainless steels such as iron-chromium alloys austenitic steels, and choromium-nickel austenitic stainless steels, and chromium-manganese steel. Useful materials also include alloys such a manganese alloys, such as manganese aluminum alloy, manganese bronze alloy and the like; nickel aloys such as, nickel bronze, nickel-cast iron alloy, nickel-chromium alloys, nickel-chromium steel alloys, nickel copper alloys, nickel-chromium alloys, nickel-chromium steel alloys, nickel copper alloys, nickel-molybdenum iron alloys, nickel-molybdenum steel alloys, nickel-silver alloys, nickel-steel alloys and the like; iron-chromium-molybdenum-cobalt-steel alloys; magnesium alloys; aluminum alloys such as those of aluminum alloy 1000 series of commercially pure aluminum, aluminum-magnesium-anganese alloys, aluminum-magnesium alloys, aluminum-copper alloys, aluminum-silicon-magnesium alloys of 6000 series, aluminum-copper-chromium of 7000 series, aluminum casting alloys; aluminum brass alloys and aluminum bronze alloys and the like.

Planar bodies 20 may also be formed from a rigid multilayered laminates formed from a plurality of fibrous layers as for example woven or non-woven fabrics, fibrous laminates having 0°/90° configuration and the like. These layers may be consolidated into a laminate through use of conventional consolidation means such as adhesives, bolts, staples, screws, stitching and the like.

The composites of this invention can be used for conventional purposes. For example, such composites can be used in the fabrication of penetration resistance articles and the like using conventional methods. For example, such penetration resistant articles include meat cutter aprons, protective gloves, boots, tents, fishing gear and the like.

The articles are particularly useful in the fabrication of body armor or penetration resistant articles such as "bulletproof" lining for example, a raincoat because of the flexibility of the article and its enhanced penetration resistance.

The following examples are presented to provide a more complete understanding of the invention and are not to be construed as limitations thereon.

In ballistic studies, the specific weight of the shells and plates can be expressed in terms of the areal density (ADT). This areal density corresponds to the weight per unit area of the ballistic resitant armor. In the case of filament reinforced composites, the ballistic resistance of which depends mostly on filaments, another useful weight characteristic is the filament areal density of the composite. This term corresponds to the weight of the filament reinforcement per unit area of the composite (AD).

### EXAMPLE I

### PREPARATION AND PUNCTURE OF SEWN FABRICS

A series of 9 inch (22.9cm) square fabric targets were prepared by sewing multiple fabric layers together using a Singer industrial sewing machine Model # 111 W113. Squares were cut with yarn fill direction parallel to one set of sides and the warp direction paralleled to the other set of sides. The multiple fabric layers were held in a jig and the target was indexed the desired distance before sewing each seam in order to create uniformly parallel lines having a relatively constant seam distance. Target descriptions are given in Table 1.

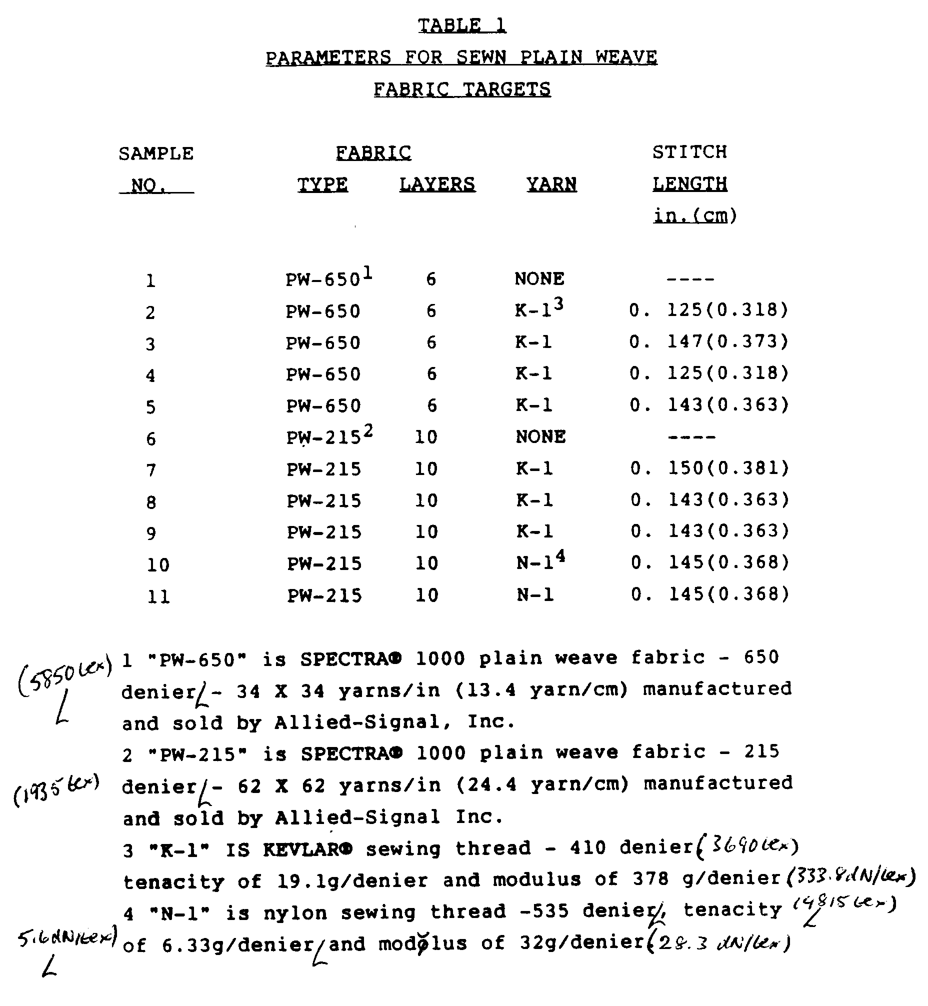

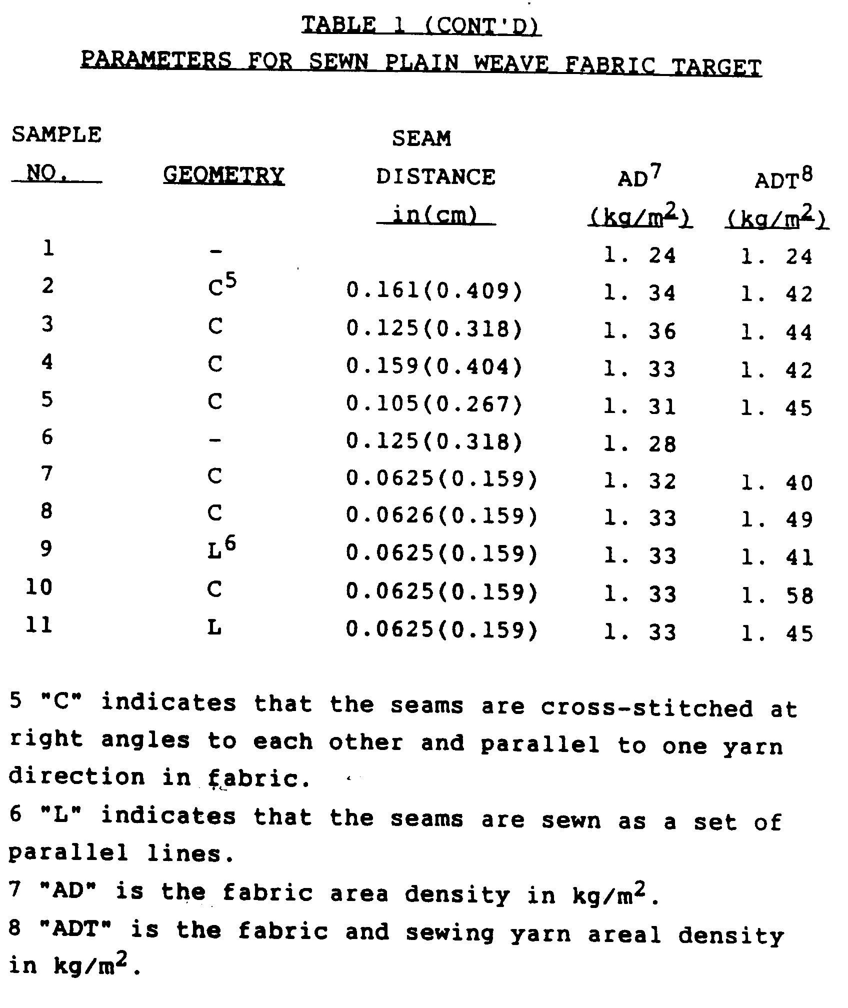

The penetration resistance of certain of the fabric samples described in Table I was determined using a small diameter (2. 67mm -0.105 in.) probe. The probe was cylindrical with pointed impact end (included angle for point was 53 degrees). A servo-hydraulic Instron test apparatus designed for high velocity loading was used to provide an impacting velocity of approximately 12 ft./S (3.66 m/s) Samples were held between two flat circular rings having an inside diameter of 3 inches. (7.62 cm). The results are set forth in the following Table 2.

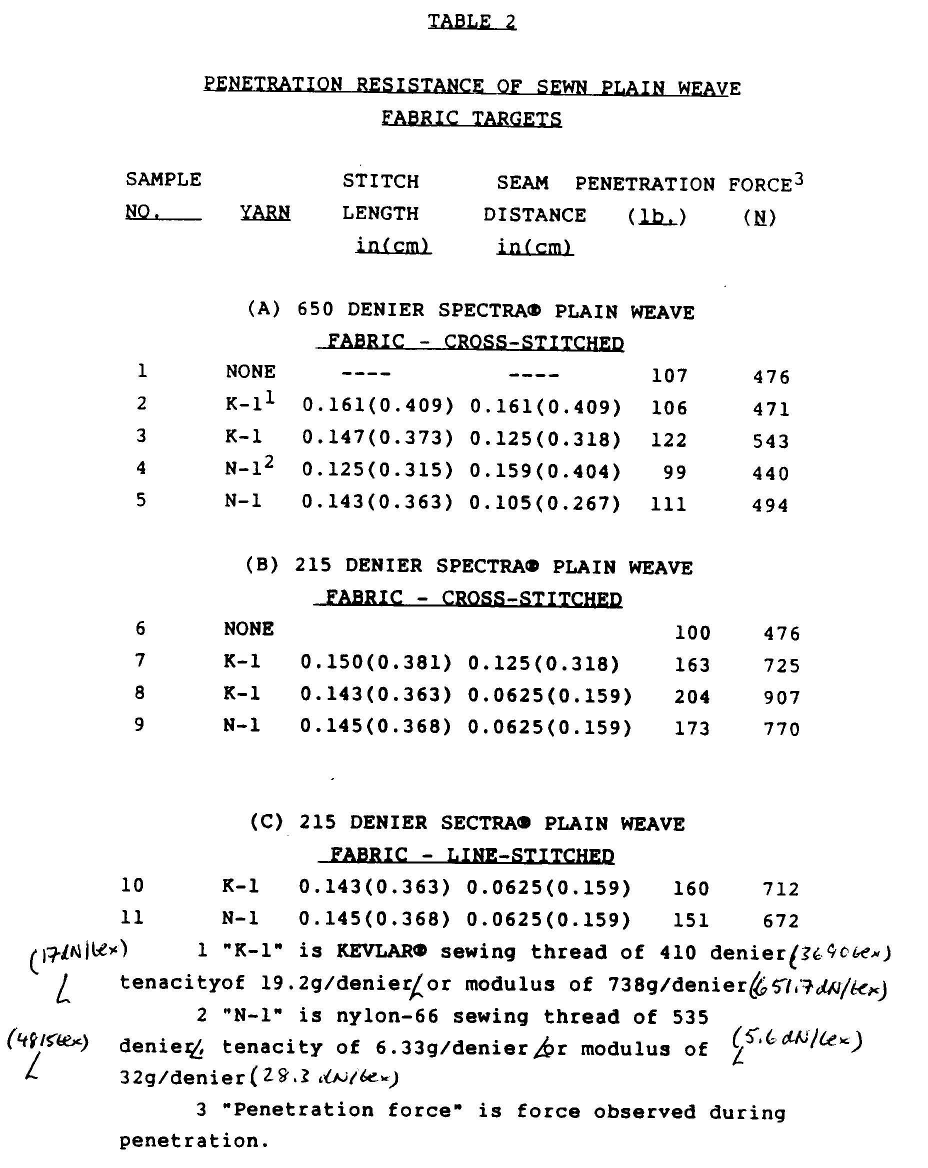

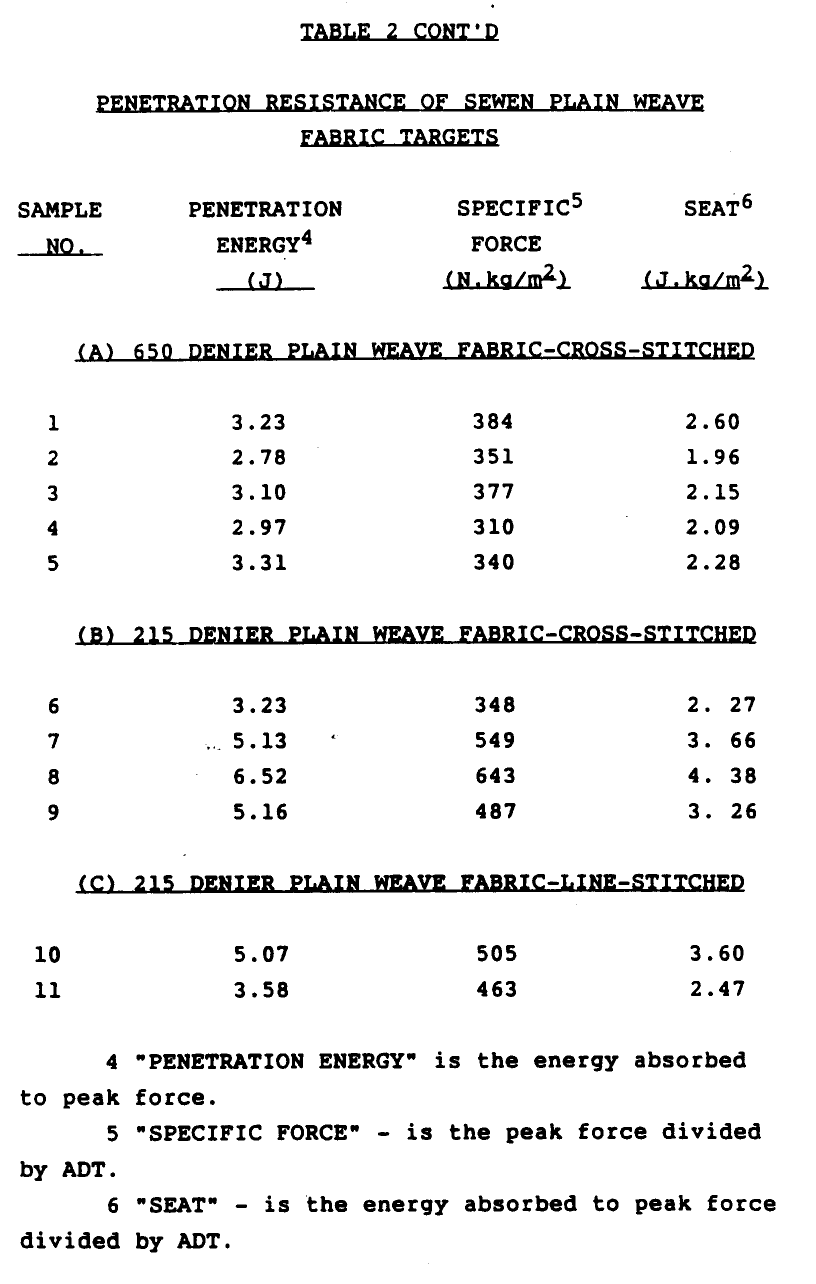

### EXAMPLE II

A 2cm square in a woven fabric (basket weave from 215 denier Spectra® 1000 polyethylene yarn) and Spectra Shield® prepared (80% Spectra® 1000, and 20 wt% Kraton® D1107) were hand sewn with 555 denier Spectra® 1000 stitching yarn in the central area of the target using stitches approximately 3mm apart. The penetration resistances of these stitched targets were evaluated by impacting the targets at 12 ft./s (3.66m/s) with a 0.07 inch (2. 72mm) diameter pointed probe. The results using the fabric target are shown in Table 1 and using the Spectra® target in Table 2. For comparison purposes each table includes puncture resistance for an unstitched control using the above described procedure.

**TABLE 1**

| PUNCTURED RESISTANCE OF FABRIC TARGETS | | | | | |
|---|---|---|---|---|---|
| SAMPLE NO. | ADT (kg/m² | ENDS/IN. | FABRIC LAYERS | PEAK FORCE lb.(kg) | PENETRATION ENERGY (J) |
| | | | | | |

| (A) STITCHED FABRIC | | | | | |
|---|---|---|---|---|---|
| 1 | 2.48 | 82 X 82 | 13 | 119(54.03) | 2.73 |

| (B) UNSTITCHED CONTROL | | | | | |
|---|---|---|---|---|---|
| 2 | 2.03 | 82 X 82 | 13 | 87(39.50) | 1.96 |

**TABLE 2**

| PUNCTURE RESISTANCE OF SPECTRA® SHIELD COMPOSITES | | | | | |
|---|---|---|---|---|---|
| SAMPLE NO. | ADT (kg/m²) | PREPREG LAYERS PER PANEL | NO OF PANELS | PEAK FORCE lb.(kg) | TOTAL ENERGY (J) |
| | | | | | |

| (A) STITCHED | | | | | |
|---|---|---|---|---|---|
| 1 | 2.52 | 2 | 18 | 92.0 (41.77) | 2.20 |

| (B) UNSTITCHED CONTROL | | | | | |
|---|---|---|---|---|---|
| 2 | 2.07 | 2 | 18 | 91.8 (41.68) | 1.68 |

## Claims

1. Penetration resistant article of the type comprising a plurality of flexible fibrous layers, at least two of which are secured together by a plurality of rows of stitches, characterized in that the stitches are comprised of fiber having a tensile modulus equal to or greater than 200 grams/denier (176.6 dN/tex) and a tenacity equal to or greater than 5 grams/denier (4.42 dN/tex), and in that said fibrous layers comprise fibers having a tensile strength of at least 7 grams/denier (6.18 dN/tex), a tensile modulus of at least 160 grams/denier (141.28 dN/tex) and an energy-to-break of at least 30 joules/gram whereby said article provides resistance to low velocity threats from sharp articles, such as knives.

2. An article according to Claim 1 characterized in that the fiber forming said stitches has a tenacity of at least 15 grams/denier (13.25 dN/tex) and tensile modulus of at least 200 grams/denier (176.6 dN/tex).

3. An article according to Claim 2 characterized in that said fiber has a tenacity from 20 to 50 grams/denier (17.66 to 44.15 dN/tex) and tensile modulus from 200 to 3000 grams/denier (176.6 to 2649 dN/tex).

4. An article according to Claims 1 to 3 characterized in that said fiber is polyethylene fiber, aramid fiber, or a combination thereof.

5. An article according to Claim 4 characterized in that said fiber is polyethylene fiber.

6. An article according to Claim 4 characterized in that said fiber is a combination of aramid fiber and polyethylene fiber.

7. An article according to any one of Claims 1 to 6 characterized in that said plurality of stitches comprises a plurality of parallel or substantially parallel first stitches and a plurality of parallel or substantially parallel second stitches, said plurality of first and second stitches intersecting at an angle.

8. An article according to Claim 7 characterized in that said fibrous layer comprises more than one layer, in which the fibers in each layer are arranged parallel or substantially parallel to one another along a common fiber direction, with the longitudinal axes of fibers contained in individual layers being aligned at an angle with respect to the longitudinal fiber axis of the fiber contained in adjacent layers.

## Patentansprüche

1. Eindringfestes Erzeugnis mit mehreren flexiblen Faserschichten, von denen mindestens zwei über mehrere Reihen von Stichen miteinander verbunden sind, dadurch gekennzeichnet, daß die Stiche aus Faser mit einem Zugmodul von mindestens 200 Gramm/Denier (176,6 dN/tex) und einer Feinheitsfestigkeit von mindestens 5 Gramm/Denier (4,42 dN/tex) gebildet sind und daß die Faserschichten aus Fasern mit einer Zugfestigkeit von mindestens 7 Gramm/Denier (6,18 dN/tex), einem Zugmodul von mindestens 160 Gramm/Denier (141,28 dN/tex) und einer Brucharbeit von mindestens 30 Joule/Gramm gebildet sind, wobei das Erzeugnis gegen langsamere Gefährdungen durch scharfe Gegenstände, wie Messerstiche, schützt.

2. Erzeugnis nach Anspruch 1, dadurch gekennzeichnet, daß die die Stiche bildende Faser eine Feinheitsfestigkeit von mindestens 15 Gramm/Denier (13,25 dN/tex) und einen Zugmodul von mindestens 200 Gramm/Denier (176,6 dN/tex) aufweist.

3. Erzeugnis nach Anspruch 2, dadurch gekennzeichnet, daß die Faser eine Feinheitsfestigkeit von 20 bis 50 Gramm/Denier (17,66 bis 44,15 dN/tex) und einen Zugmodul von 200 bis 3000 Gramm/Denier (176,6 bis 2649 dN/tex) aufweist.

4. Erzeugnis nach den Ansprüchen 1 bis 3, dadurch gekennzeichnet, daß es sich bei der Faser um Polyethylenfaser, Aramidfaser oder eine Kombination davon handelt.

5. Erzeugnis nach Anspruch 4, dadurch gekennzeichnet, daß es sich bei der Faser um Polyethylenfaser handelt.

6. Erzeugnis nach Anspruch 4, dadurch gekennzeichnet, daß es sich bei der Faser um eine Kombination von Aramidfaser und Polyethylenfaser handelt.

7. Erzeugnis nach einem der Ansprüche 1 bis 6, dadurch gekennzeichnet, daß die mehreren Stiche mehrere parallel oder weitgehend parallel zueinander verlaufende erste Stiche und mehrere parallel oder weitgehend parallel zueinander verlaufende zweite Stiche umfassen, wobei die mehreren ersten und zweiten Stiche sich unter einem Winkel schneiden.

8. Erzeugnis nach Anspruch 7, dadurch gekennzeichnet, daß die Faserschicht mehr als eine Schicht umfaßt, in der die Fasern jeder Schicht parallel oder weitgehend parallel zueinander entlang einer gemeinsamen Faserrichtung angeordnet sind, wobei die Längsachsen der in den einzelnen Schichten enthaltenen Fasern bezüglich der Längsfaseraxis der in angrenzenden Schichten enthaltenen Faser unter einem Winkel ausgerichtet sind.

## Revendications

1. Article résistant à la pénétration du type comprenant une pluralité de couches fibreuses flexibles, dont au moins deux sont fixées l'une à l'autre par une pluralité de rangées de points, caractérisé en ce que les points sont constitués de fibre ayant un module en traction supérieur ou égal à 200 g/denier (176,6 dN/tex) et une ténacité supérieure ou égale à 5 g/denier (4,42 dN/tex), et en ce que lesdites couches fibreuses comprennent des fibres ayant une résistance en traction d'au moins 7 g/denier (6,18 dN/tex), un module en traction d'au moins 160 grammes/denier (141,28 dN/tex) et une énergie à la rupture d'au moins 30 joules/gramme, ledit article procurant ainsi une résistance à des menaces par des articles pointus à faible vitesse, tels que des couteaux.

2. Article selon la revendication 1, caractérisé en ce que la fibre formant lesdits points a une ténacité d'au moins 15 grammes/denier (13,25 dN/tex) et un module en traction d'au moins 200 grammes/denier (176,6 dN/tex).

3. Article selon la revendication 2, caractérisé en ce que ladite fibre a une ténacité de 20 à 50 grammes/denier (de 17,66 à 44,15 dN/tex) et un module en traction de 200 à 3 000 grammes/denier (de 176,6 à 2 649 dN/tex).

4. Article selon les revendications 1 à 3, caractérisé en ce que ladite fibre est de la fibre de polyéthylène, de la fibre d'aramide ou une combinaison de celles-ci.

5. Article selon la revendication 4, caractérisé en ce que ladite fibre est de la fibre de polyéthylène.

6. Article selon la revendication 4, caractérisé en ce que ladite fibre est une combinaison de fibre d'aramide et de fibre de polyéthylène.

7. Article selon l'une quelconque des revendications 1 à 6, caractérisé en ce que ladite pluralité de points comprend une pluralité de premiers points parallèles ou essentiellement parallèles et une pluralité de deuxièmes points parallèles ou essentiellement parallèles, ladite pluralité de premiers et deuxièmes points se coupant en formant un angle.

8. Article selon la revendication 7, caractérisé en ce que ladite couche fibreuse comprend plus d'une couche, où les fibres dans chaque couche sont agencées de manière parallèle ou essentiellement parallèles les unes aux autres le long d'une direction de fibre commune, les axes longitudinaux des fibres contenues dans les couches individuelles étant alignés en formant un angle par rapport à l'axe de fibre longitudinal de la fibre contenue dans les couches adjacentes.
